# EUROPEAN PATENT SPECIFICATION

(11) **EP 3 359 585 B1**
(45) Date of publication and mention of the grant of the patent: **24.07.2019**
(21) Application number: 16781159.5
(22) Date of filing: 04.10.2016
(51) Int. Cl.: C08G 63/82, C08G 69/20

(54) **USE OF COMPOUNDS IN POLYMERISATION REACTIONS**
VERWENDUNG VON VERBINDUNGEN IN POLYMERISIERUNGSREAKTIONEN
UTILISATION DE COMPOSÉS DANS DES RÉACTIONS DE POLYMÉRISATION

(30) Priority: 06.10.2015 GB 201517653
(43) Date of publication of application: 15.08.2018
(73) Proprietor: SCG Chemicals Co., Ltd., Bangkok 10800 (TH)
(72) Inventor: O'HARE, Dermot, Oxford OX1 3TA (GB); BUFFET, Jean-Charles, Oxford OX1 3TA (GB); WRIGHT, Christopher, Oxford OX1 3TA (GB)
(74) Representative: HGF Limited
(86) International application number: PCT/GB2016/053087
(87) International publication number: WO 2017/060691

(56) References cited:
- WO-A2-2015/155214
- US-A1- 2008 249 255
- JEAN-CHARLES BUFFET ET AL: "Group 4 metal initiators for the controlled stereoselective polymerization of lactide monomers", CHEMICAL COMMUNICATIONS - CHEMCOM., vol. 47, no. 16, 1 January 2011 (2011-01-01), pages 4796-4798, XP055325366, ISSN: 1359-7345, DOI: 10.1039/c1cc10149h
- ZOË R. TURNER ET AL: "Chiral Group 4 Cyclopentadienyl Complexes and Their Use in Polymerization of Lactide Monomers", ORGANOMETALLICS, vol. 33, no. 14, 28 July 2014 (2014-07-28) , pages 3891-3903, XP055325367, US ISSN: 0276-7333, DOI: 10.1021/om500634a
- HAYAKAWA M ET AL: "LIVING RING-OPENING POLYMERIZATION OF LACTONES USING CATIONIC ZIRCONOCENE COMPLEX CATALYSTS", MACROMOLECULAR CHEMISTRY AND PHYSICS, WILEY-VCH VERLAG, WEINHEIM, DE, vol. 198, no. 5, 1 May 1997 (1997-05-01), pages 1305-1317, XP000657570, ISSN: 1022-1352, DOI: 10.1002/MACP.1997.021980502
- HAYAKAWA M ET AL: "LIVING RING-OPENING POLYMERIZATION OF CYCLIC CARBONATE USING CATIONIC ZIRCONOCENE COMPLEX AS CATALYST", MACROMOLECULAR RAPID COMMUNICATIONS,, vol. 17, no. 12, 1 December 1996 (1996-12-01), pages 865-870, XP000636335, ISSN: 1022-1336, DOI: 10.1002/MARC.1996.030171204

## Description

### INTRODUCTION

The present invention relates to the use of compounds in the polymerisation of cyclic esters and cyclic amides. More specifically, the invention relates to the use of ansa-metallocene compounds in the polymerisation of cyclic esters and cyclic amides.

### BACKGROUND OF THE INVENTION

Poly(lactic acids) (PLAs) have been studied intensively over the past few decades due to the promise they have shown as potential alternatives to petroleum-based polymers for uses a plastics, fibres and coatings. Moreover, since PLAs are both biodegradable and biocompatible, they are of equal value to the field of medicine, wherein their versatile physical properties make them suitable for in vivo applications (e.g. as media for controlled drug delivery devices).

Lactic acid forms PLA upon polycondensation. However, the fact that this reaction is in equilibrium, and the difficulties in completely removing water, makes it difficult to obtain PLAs of high molecular weight. With this in mind, ring opening polymerisation (ROP) of lactides is the most efficient route to PLAs with controlled molecular weights and narrow molecular weight distributions.

Metal complexes useful for initiating ring opening polymerisation of lactides are known.

Wenshan Ren et al, Inorganic Chemistry Communications, 30, (2013), 26-28 report that benzyl thorium metallocenes [η⁵-1,3-(Me₃C)₂C₅H₃]₂ Th(CH₂Ph)₂ (1) and [η⁵-1,2,4-(Me₃C)₃C₅H₂]₂ Th(CH₂Ph)₂ (2) can initiate the ring opening polymerisation of racemic-lactide (*rac*-LA) under mild conditions. Complete conversion of 500 equiv of lactide occurs within 5h at 40°C in dichloromethane at [*rac*-LA]=1.0 mol L⁻¹, and the molecular weight distribution is very narrow (ca.1.15) over the entire monomer-to-initiator range, indicating a single-site catalyst system.

Yalan Ning et al, Organometallics 2008, 27, 5632-5640 report four neutral zirconocene bis(ester enolate) and non-zirconocene bis(alkoxy) complexes employed for ring-opening polymerisations and chain transfer polymerisations of L-lactide (*L*-LA) and ε-caprolactone (ε-CL).

In spite of the above, due to the high value that industry places on such materials, there remains a need for catalysts/initiators capable of effectively polymerising cyclic esters (such as lactides) and cyclic amides.

Document US 2008/249255 discloses the polymerisation of lactides using dicyclopentadienyl type zirconocenes.

The present invention was devised with the foregoing in mind.

### SUMMARY OF THE INVENTION

According to a first aspect of the present invention there is provided a use of a compound according to formula I defined herein in the polymerisation of cyclic esters or cyclic amides.

According to another aspect of the present invention, there is provided a process for polymerising one or more cyclic esters or cyclic amides comprising the step of polymerising one or more cyclic esters or cyclic amides in the presence of a compound of formula I defined herein.

According to another aspect of the present invention, there is provided a polymer obtainable, obtained or directly obtained by a polymerisation process defined herein.

### DETAILED DESCRIPTION OF THE INVENTION

### Definitions

The term "alkyl" as used herein includes reference to a straight or branched chain alkyl moieties, typically having 1, 2, 3, 4, 5 or 6 carbon atoms. This term includes reference to groups such as methyl, ethyl, propyl (n-propyl or isopropyl), butyl (n-butyl, sec-butyl or tert-butyl), pentyl, hexyl and the like. In particular, an alkyl may have 1, 2, 3 or 4 carbon atoms.

The term "alkenyl" as used herein include reference to straight or branched chain alkenyl moieties, typically having 1, 2, 3, 4, 5 or 6 carbon atoms. The term includes reference to alkenyl moieties containing 1, 2 or 3 carbon-carbon double bonds (C=C). This term includes reference to groups such as ethenyl (vinyl), propenyl (allyl), butenyl, pentenyl and hexenyl, as well as both the *cis* and *trans* isomers thereof.

The term "alkynyl" as used herein include reference to straight or branched chain alkynyl moieties, typically having 1, 2, 3, 4, 5 or 6 carbon atoms. The term includes reference to alkynyl moieties containing 1, 2 or 3 carbon-carbon triple bonds (C≡C). This term includes reference to groups such as ethynyl, propynyl, butynyl, pentynyl and hexynyl.

The term "alkoxy" as used herein include reference to -O-alkyl, wherein alkyl is straight or branched chain and comprises 1, 2, 3, 4, 5 or 6 carbon atoms. In one class of embodiments, alkoxy has 1, 2, 3 or 4 carbon atoms. This term includes reference to groups such as methoxy, ethoxy, propoxy, isopropoxy, butoxy, tert-butoxy, pentoxy, hexoxy and the like.

The term "aryl" as used herein includes reference to an aromatic ring system comprising 6, 7, 8, 9 or 10 ring carbon atoms. Aryl is often phenyl but may be a polycyclic ring system, having two or more rings, at least one of which is aromatic. This term includes reference to groups such as phenyl, naphthyl and the like. Unless otherwise specification, aryl groups may be substituted by one or more substituents.

The term "aryloxy" as used herein refers to -O-aryl, wherein aryl has any of the definitions discussed herein. Also encompassed by this term are aryloxy groups in having an alkylene chain situated between the O and aryl groups..

The term "halogen" or "halo" as used herein includes reference to F, Cl, Br or I. In a particular, halogen may be F or Cl, of which Cl is more common.

The term "substituted" as used herein in reference to a moiety means that one or more, especially up to 5, more especially 1, 2 or 3, of the hydrogen atoms in said moiety are replaced independently of each other by the corresponding number of the described substituents. The term "optionally substituted" as used herein means substituted or unsubstituted.

It will, of course, be understood that substituents are only at positions where they are chemically possible, the person skilled in the art being able to decide (either experimentally or theoretically) without inappropriate effort whether a particular substitution is possible. For example, amino or hydroxy groups with free hydrogen may be unstable if bound to carbon atoms with unsaturated (e.g. olefinic) bonds. Additionally, it will of course be understood that the substituents described herein may themselves be substituted by any substituent, subject to the aforementioned restriction to appropriate substitutions as recognised by the skilled person.

The terms "cyclic esters" and "cyclic amides" as used herein refer to heterocycles containing at least one ester or amide moiety. It will be understood that lactides, lactones and lactams are encompassed by these terms.

### Polymerisation of cyclic esters and cyclic amides

As discussed hereinbefore, the present invention provides a use of a compound according to formula I shown below in the polymerisation of cyclic esters or cyclic amides: 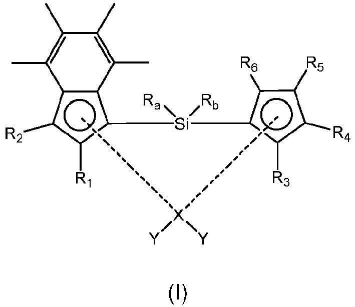 wherein:
R₁ and R₂ are each independently (1-2C)alkyl;
R₃ and R₄ are each independently hydrogen or (1-4C)alkyl, or R₃ and R₄ are linked such that, when taken in combination with the atoms to which they are attached, they form a 6-membered fused aromatic ring optionally substituted with one or more groups selected from (1-6C)alkyl, (2-6C)alkenyl, (2-6C)alkynyl, (1-6C)alkoxy, aryl, heteroaryl, carbocyclic and heterocyclic, wherein each aryl, heteroaryl, carbocyclic and heterocyclic group is optionally substituted with one or more groups selected from (1-6C)alkyl, (2-6C)alkenyl, (2-6C)alkynyl, (1-6C)alkoxy, halo, amino, nitro, cyano, (1-6C)alkylamino, [(1-6C)alkyl]₂amino and -S(O)₂(1-6C)alkyl;
R₅ and R₆ are each independently hydrogen or (1-4C)alkyl, or R₅ and R₆ are linked such that, when taken in combination with the atoms to which they are attached, they form a 6-membered fused aromatic ring optionally substituted with one or more groups selected from (1-6C)alkyl, (2-6C)alkenyl, (2-6C)alkynyl, (1-6C)alkoxy, aryl, heteroaryl, carbocyclic and heterocyclic, wherein each aryl, heteroaryl, carbocyclic and heterocyclic group is optionally substituted with one or more groups selected from (1-6C)alkyl, (2-6C)alkenyl, (2-6C)alkynyl, (1-6C)alkoxy, halo, amino, nitro, cyano, (1-6C)alkylamino, [(1-6C)alkyl]₂amino and -S(O)₂(1-6C)alkyl;
Rₐ and R_{b} are independently selected from (1-6C)alkyl, (1-6C)alkoxy, (2-6C)alkenyl, (2-6C)alkynyl, (1-6C)alkylamino, [(1-6C)alkyl]₂amino, aryl, halo, amino, nitro and cyano;
X is selected from zirconium or hafnium; and
each Y group is independently selected from halo, hydride, a phosphonated, sulfonated or borate anion, or a (1-6C)alkyl, (2-6C)alkenyl, (2-6C)alkynyl, (1-6C)alkoxy, aryl or aryloxy group which is optionally substituted with one or more groups selected from (1-6C)alkyl, halo, nitro, amino, phenyl, (1-6C)alkoxy, -C(O)NRₓR_{y}, or Si[(1-4C)alkyl]₃; and
wherein Rₓ and R_{y} are independently (1-4C)alkyl.

In an embodiment:
i) when R₃ and R₄ are hydrogen or (1-4C)alkyl, R₅ and R₆ are not linked to form a fused 6-membered aromatic ring that is substituted with four methyl groups; and
ii) when R₅ and R₆ are hydrogen or (1-4C)alkyl, R₃ and R₄ are not linked to form a fused 6-membered aromatic ring that is substituted with four methyl groups.

Having regard to the proviso outlined above, it will be understood that the particular motifs not covered are as follows:

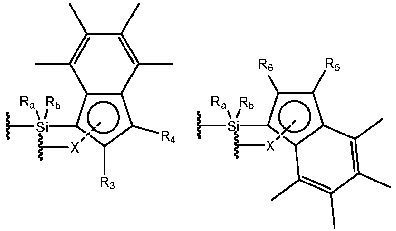

The present invention also provides a process of polymerising one or more cyclic esters or cyclic amides comprising polymerising one or more cyclic esters or cyclic amides in the presence of a compound of formula I defined herein.

It will be appreciated that the structural formula I presented above is intended to show the substituent groups in a clear manner. A more representative illustration of the spatial arrangement of the groups is shown in the alternative representation below:

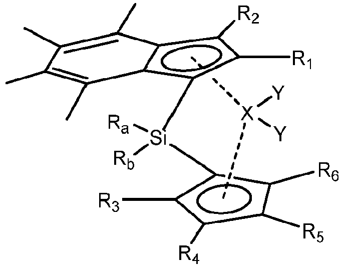

It will also be appreciated that when substituents R₃ and R₄ are not identical to substituents R₅ and R₆ respectively, the compounds of the present invention may be present as *meso* or *rac* isomers, and the present invention includes both such isomeric forms. A person skilled in the art will appreciate that a mixture of isomers of the compound of formula I may be used for polymerisation, or the isomers may be separated and used individually (using techniques well known in the art, such as, for example, fractional crystallization).

If the structure of a compound of formula I is such that rac and *meso* isomers do exist, the compound may be present in the *rac* form only, or in the *meso* form only.

The compounds of formula I are effective initiators/catalysts in the polymerisation of cyclic esters and amides (e.g. lactides and lactams), with the resulting polymers exhibiting low polydispersity idences, thus making them highly desirable to industry.

In an embodiment, R₃ and R₄ are each independently hydrogen or linear (1-4C)alkyl, or R₃ and R₄ are linked such that, when taken in combination with the atoms to which they are attached, they form a 6-membered fused aromatic ring optionally substituted with one or more groups selected from (1-6C)alkyl, (2-6C)alkenyl, (2-6C)alkynyl, (1-6C)alkoxy, aryl, heteroaryl, carbocyclic and heterocyclic, wherein each aryl, heteroaryl, carbocyclic and heterocyclic group is optionally substituted with one or more groups selected from (1-6C)alkyl, (2-6C)alkenyl, (2-6C)alkynyl, (1-6C)alkoxy and halo.

Suitably, R₃ and R₄ are each independently hydrogen or linear (1-4C)alkyl, or R₃ and R₄ are linked such that, when taken in combination with the atoms to which they are attached, they form a 6-membered fused aromatic ring optionally substituted with one or more groups selected from (1-6C)alkyl, (2-6C)alkenyl, (2-6C)alkynyl, (1-6C)alkoxy, aryl or heteroaryl, wherein each aryl or heteroaryl group is optionally substituted with one or more groups selected from (1-6C)alkyl, (2-6C)alkenyl, (2-6C)alkynyl, (1-6C)alkoxy and halo.

More suitably, R₃ and R₄ are each independently hydrogen or linear (1-4C)alkyl, or R₃ and R₄ are linked such that, when taken in combination with the atoms to which they are attached, they form a 6-membered fused aromatic ring optionally substituted with one or more groups selected from (1-4C)alkyl, (2-4C)alkenyl, (2-4C)alkynyl, (1-4C)alkoxy, aryl or heteroaryl, wherein each aryl or heteroaryl group is optionally substituted with one or more groups selected from (1-4C)alkyl, (2-4C)alkenyl, (2-4C)alkynyl, (1-4C)alkoxy and halo.

Even more suitably, wherein R₃ and R₄ are each independently hydrogen or linear (1-4C)alkyl, or R₃ and R₄ are linked such that, when taken in combination with the atoms to which they are attached, they form a 6-membered fused aromatic ring.

Most suitably, R₃ and R₄ are each hydrogen.

In another embodiment, R₅ and R₆ are each independently hydrogen or linear (1-4C)alkyl, or R₅ and R₆ are linked such that, when taken in combination with the atoms to which they are attached, they form a 6-membered fused aromatic ring optionally substituted with one or more groups selected from (1-6C)alkyl, (2-6C)alkenyl, (2-6C)alkynyl, (1-6C)alkoxy, aryl, heteroaryl, carbocyclic and heterocyclic, wherein each aryl, heteroaryl, carbocyclic and heterocyclic group is optionally substituted with one or more groups selected from (1-6C)alkyl, (2-6C)alkenyl, (2-6C)alkynyl, (1-6C)alkoxy and halo.

Suitably, R₅ and R₆ are each independently hydrogen or linear (1-4C)alkyl, or R₅ and R₆ are linked such that, when taken in combination with the atoms to which they are attached, they form a 6-membered fused aromatic ring optionally substituted with one or more groups selected from (1-6C)alkyl, (2-6C)alkenyl, (2-6C)alkynyl, (1-6C)alkoxy, aryl or heteroaryl, wherein each aryl or heteroaryl group is optionally substituted with one or more groups selected from (1-6C)alkyl, (2-6C)alkenyl, (2-6C)alkynyl, (1-6C)alkoxy and halo.

More suitably, R₅ and R₆ are each independently hydrogen or linear (1-4C)alkyl, or R₅ and R₆ are linked such that, when taken in combination with the atoms to which they are attached, they form a 6-membered fused aromatic ring optionally substituted with one or more groups selected from (1-4C)alkyl, (2-4C)alkenyl, (2-4C)alkynyl, (1-4C)alkoxy, aryl or heteroaryl, wherein each aryl or heteroaryl group is optionally substituted with one or more groups selected from (1-4C)alkyl, (2-4C)alkenyl, (2-4C)alkynyl, (1-4C)alkoxy and halo.

Even more suitably, wherein R₅ and R₆ are each independently hydrogen or linear (1-4C)alkyl, or R₅ and R₆ are linked such that, when taken in combination with the atoms to which they are attached, they form a 6-membered fused aromatic ring.

Most suitably, R₅ and R₆ are each hydrogen.

In a particularly suitable embodiment, R₃, R₄, R₅, and R₆ are hydrogen.

In another embodiment, R₁ and R₂ are each independently (1-2C)alkyl. Suitably, R₁ and R₂ are both methyl.

In another embodiment, X is Zr.

In another embodiment, each Y is independently selected from halo, hydride, a phosphonated, sulfonated or borate anion, or a (1-6C)alkyl, (2-6C)alkenyl, (2-6C)alkynyl, (1-6C)alkoxy, aryl or aryloxy group which is optionally substituted with one or more groups selected from halo and (1-4C)alkyl.

Suitably, each Y is independently selected from halo, hydride, or a (1-6C)alkyl, (2-6C)alkenyl, (2-6C)alkynyl, (1-6C)alkoxy, aryl or aryloxy group which is optionally substituted with one or more groups selected from halo and (1-4C)alkyl.

More suitably, each Y is independently selected from halo, or a (1-6C)alkoxy, or aryloxy group which is optionally substituted with one or more groups selected from halo and (1-4C)alkyl.

Even more suitably, each Y is independently selected from Cl, Br, I or a group -OR₇, wherein R₇ is a phenyl group optionally substituted with one or more R₈, wherein each R₈ is independently (1-4C)alkyl. For example the group -OR₇ may have the following structure:

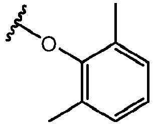

In a particular embodiment, both Y groups are Cl, or one Y is Cl and the other Y is a group -OR₇ having the structure shown above.

In another embodiment, Rₐ and R_{b} are each independently (1-6C)alkyl or (2-6C)alkenyl. Suitably, Rₐ and R_{b} are each independently (1-4C)alkyl. More suitably, Rₐ and R_{b} are each methyl.

In another embodiment, the compound of formula I has a structure according to formula Ia, Ib or Ic shown below: 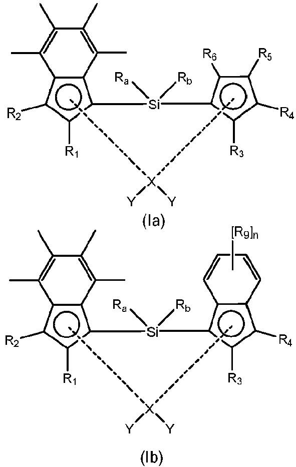 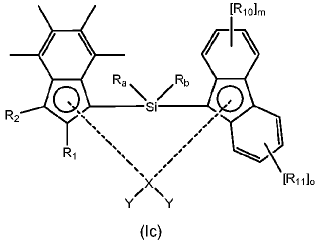 wherein
X, Y, Rₐ and R_{b} have any of the definitions set out hereinbefore;
R₁ and R₂ are independently selected from (1-2C)alkyl;
R₃, R₄, R₅ and R₆ are each independently selected from hydrogen, (1-4C)alkyl, (2-4C)alkenyl and (2-4C)alkynyl; and
each R₉, R₁₀ and R₁₁ is independently selected from (1-6C)alkyl, (2-6C)alkenyl, (2-6C)alkynyl, (1-6C)alkoxy, aryl, heteroaryl, carbocyclic and heterocyclic, wherein each aryl, heteroaryl, carbocyclic and heterocyclic group is optionally substituted with one or more groups selected from (1-6C)alkyl, (2-6C)alkenyl, (2-6C)alkynyl, (1-6C)alkoxy, halo, amino, nitro, cyano, (1-6C)alkylamino, [(1-6C)alkyl]₂amino and -S(O)₂(1-6C)alkyl.

In another embodiment, the compound of formula I has a structure according to formula la, Ib or Ic, wherein
X is Zr;
each Y is independently selected from halo, or a (1-6C)alkoxy, or aryloxy group which is optionally substituted with one or more groups selected from halo and (1-4C)alkyl;
Rₐ and R_{b} are each independently (1-2C)alkyl;
R₁ and R₂ are independently selected from (1-2C)alkyl
R₃, R₄, R₅ and R₆ are each independently selected from hydrogen or (1-4C)alkyl; and
each R₉, R₁₀ and R₁₁ is independently selected from (1-6C)alkyl, (2-6C)alkenyl, (2-6C)alkynyl, (1-6C)alkoxy, aryl, heteroaryl, carbocyclic and heterocyclic, wherein each aryl, heteroaryl, carbocyclic and heterocyclic group is optionally substituted with one or more groups selected from halo, (1-4C)alkyl, (2-4C)alkenyl and (2-4C)alkynyl.

In another embodiment, the compound of formula I has a structure according to formula la' shown below: 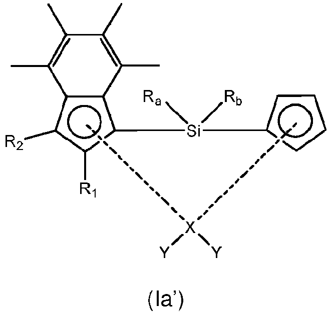 wherein
R₁ and R₂ are each independently (1-2C)alkyl;
X is Zr or Hf;
Rₐ and R_{b} are each independently (1-6C)alkyl or (2-6C)alkenyl; and
each Y is independently selected from halo, hydride, or a (1-6C)alkyl, (2-6C)alkenyl, (2-6C)alkynyl, (1-6C)alkoxy, aryl or aryloxy group which is optionally substituted with one or more groups selected from halo and (1-4C)alkyl.

Suitably, the compound of formula I has a structure according to formula la' wherein
R₁ and R₂ are each independently (1-2C)alkyl
X is Zr
Rₐ and R_{b} are each independently (1-3C)alkyl; and
each Y is independently selected from halo, or a (1-6C)alkoxy, or aryloxy group which is optionally substituted with one or more groups selected from halo and (1-4C)alkyl.

In another embodiment, the compound of formula I has a structure according to formula la" shown below: 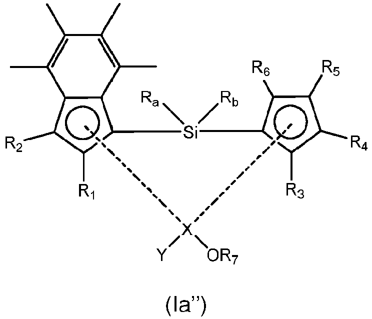 wherein
R₁ and R₂ are each independently (1-2C)alkyl
X is Hf or Zr
Rₐ and R_{b} are each independently (1-6C)alkyl or (2-6C)alkenyl; and
each Y is independently selected from halo, hydride, or a (1-6C)alkyl, (2-6C)alkenyl, (2-6C)alkynyl, (1-6C)alkoxy, aryl or aryloxy group which is optionally substituted with one or more groups selected from halo and (1-4C)alkyl.

Suitably, the compound of formula I has a structure according to formula la" wherein
R₁ and R₂ are each independently (1-2C)alkyl
X is Zr
Rₐ and R_{b} are each independently (1-3C)alkyl; and
each Y is independently selected from Cl, Br, I or (1-4C)alkyl.

In a particular embodiment, the compound of formula I is selected from any of the structures appearing below:

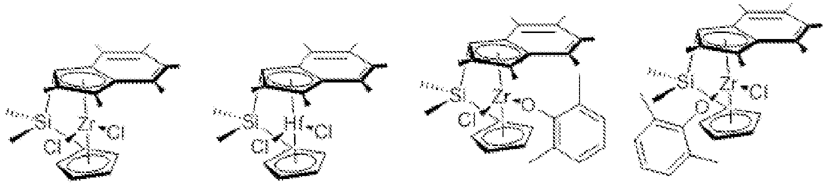

In another embodiment, the compound of formula I is used with a suitable activator. Suitable activators are well known in the art and include alcohols Particularly suitable activators include linear alcohol, tert-butanol, phenol, and benzyl alcohol.

In another embodiment, the cyclic amides and cyclic esters have a structure according to the general formula II below: 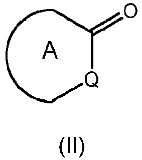 wherein
Q is selected from O or NR_{z}, wherein R_{z} is selected from H, (1-6C)alkyl, (2-6C)alkenyl or (2-6C)alkynyl; and
Ring A is a 3-16 membered heterocycle containing 1 or 2 ring heteroatoms in total, wherein the heterocycle may be optionally substituted with one or more suitable substituents selected from oxo, (1-6C)alkyl, (2-6C)alkenyl, (2-6C)alkynyl, (1-6C)alkoxy, aryl and heteroaryl.

It will be understood that the one or more cyclic esters and cyclic amides may be identical (e.g. all caprolactone) or different (e.g. a mixture of different cyclic esters and/or cyclic amides). Accordingly, the compounds of the invention may be used for the homopolymerisation or copolymerisation of cyclic esters and cyclic amides.

Suitably, the cyclic amides and cyclic esters are selected from lactides, lactones (e.g. caprolactone), and lactams.

It will be appreciated by one of skill in the art that there are three stereoisomers of lactide, shown below, all of which are encompassed by the invention:

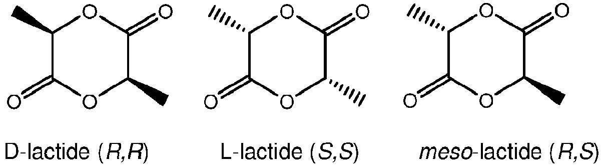

Suitably, the lactide is L-lactide.

It will also be appreciated that the term lactam encompasses β-lactams (4 ring members), γ-lactams (5 ring members), δ-lactams (6 ring members) and ε-lactams (7 ring members).

It will also be appreciated that the term lactone encompasses α-acetolactone, β-propiolactone, γ-butyrolactone, and δ-valerolactone, ω-pentadecalactone and ε-decalactone.

In an embodiment, ring A is a 3-8 membered heterocycle containing 1 or 2 ring heteroatoms in total, wherein the heterocycle may be optionally substituted with one or more suitable substituents selected from oxo, (1-6C)alkyl, (2-6C)alkenyl, (2-6C)alkynyl, (1-6C)alkoxy, aryl and heteroaryl.

### Synthesis of compounds

The compounds of formula I may be synthesised by any suitable process known in the art. Particular examples of processes for preparing compounds of formula I are set out in the accompanying examples.

Suitably, compounds of formula I may be prepared by:
(i) reacting a compound of formula A: 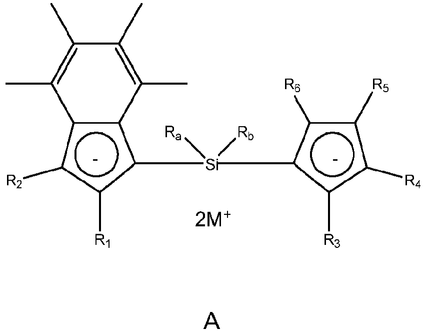 (wherein R₁, R₂, R₃, R₄, R₅, R₆, Rₐ and R_{b} are each as defined hereinbefore and M is Li, Na or K)
   with a compound of the formula B:

   X(Y')₄ B

   (wherein X is as defined hereinbefore and Y' is halo (particularly chloro or bromo))
   in the presence of a suitable solvent to form a compound of formula C: 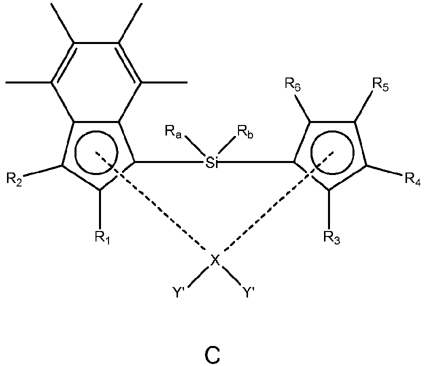 and optionally thereafter:
(ii) reacting the compound of formula C above with MY" (wherein M is as defined above and Y" is a group Y as defined herein other than halo), in the presence of a suitable solvent to form the compound of the formula D shown below 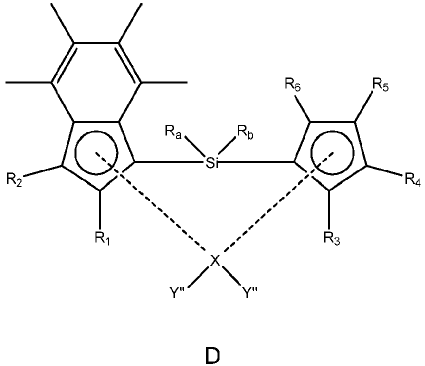 Suitably, M is Li in step (i) of the process defined above.

Suitably, the compound of formula B is provided as a solvate. In particular, the compound of formula B may be provided as X(Y')₄.THFₚ, where p is an integer (e.g. 2).

Any suitable solvent may be used for step (i) of the process defined above. A particularly suitable solvent is toluene or THF.

If a compound of formula (I) in which Y is other than halo is required, then the compound of formula C above may be further reacted in the manner defined in step (ii) to provide a compound of formula D.

Any suitable solvent may be used for step (ii) of the process defined above. A suitable solvent may be, for example, diethyl ether, toluene, THF, dicloromethane, chloroform, hexane DMF, benzene etc.

Compounds of formula A may be generally prepared by
i) Reacting a compound of formula E 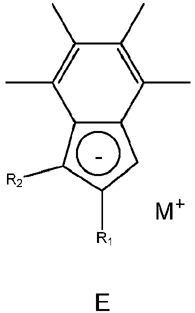 (wherein M is lithium, sodium, or potassium; and R₁ and R₂ are as defined hereinbefore) with one equivalent of a compound having formula F shown below:

   Si(Rₐ)(R_{b})(Cl)₂ F

   (wherein Rₐ and R_{b} are as defined hereinbefore)
   to form the compound of the formula G shown below: 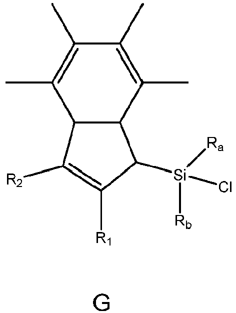
ii) Reacting the compound of formula G with a compound of formula H shown below: 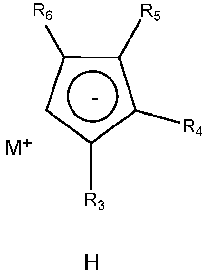 (wherein R₃, R₄, R₅ and R₆ are as defined hereinbefore, and M is lithium, sodium or potassium).

Compounds of formulae E and H can be readily synthesized by techniques well known in the art.

Any suitable solvent may be used for step (i) of the above process. A particularly suitable solvent is THF.

Similarly, any suitable solvent may be used for step (ii) of the above process. A suitable solvent may be, for example, toluene, THF, DMF etc.

A person of skill in the art will be able to select suitable reaction conditions (e.g. temperature, pressures, reaction times, agitation etc.) for such a synthesis.

### EXAMPLES

Particular examples of the invention will now be described, for illustrative purposes only. with references to the accompanying figures, in which:
Fig. 1 shows polymerisation plots of lactide conversion in function of time using SB(Cp,I*)ZrCl₂ (square), SB(Cp,I*)HfCl₂ (circle) and SB(Cp,I*)ZrCl(O-2,6-Me₂-C₆H₃) (triangle). Data points are an average of the results for each temperature.
Fig. 2 shows MALDI-TOF mass spectrum of PLA produced from SB(Cp,I*)ZrCl₂ and (*S,S*)-LA. Polymerisation conditions: 80 °C, [LA]₀:[SB(Cp,I*)ZrCl₂] of 20:1, [LA]₀ = 0.5 M, *d*₁-chloroform.
Fig. 3 shows Polymerisation plots of lactide conversion in function of time using SB(Cp,I*)ZrCl₂ (square), SB(Cp,I*)HfCl₂ (circle) and SB(Cp,l*)ZrCl(O-2,6-Me₂-C₆H₃) (triangle). Data points are an average of the results for each temperature.
Fig. 4 shows an Eyring-Polanyi plot for the polymerisation of (*S*,*S*)-lactide with SB(Cp,I*)ZrCl₂. Data points are an average of the results for each temperature, error bars are calculated to one standard deviation.
Fig. 5 shows a double logarithmic plot of variation of concentration of SB(Cp,l*)ZrCl₂ with *k*_{obs} for (*S*,*S*)-lactide.

### Example 1a - Synthesis of SB(Cp,l*)ZrCl₂

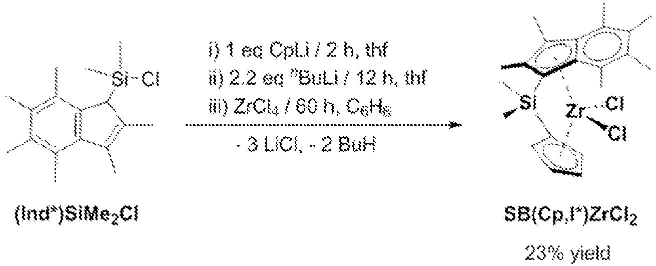

Toluene (40 ml) was added to a LiCp (246 mg, 3.41 mmol) and Ind*SiMe₂Cl (1 g, 3.41 mmol) in a Schlenk tube, dissolved in -5 °C THF (50 mL) and left to stir for two hours. *ⁿ*BuLi (4.7 mL, 1.6 M in hexanes, 7.51 mmol) was added, dropwise, over 30 minutes and the reaction left to stir for 12 hours. The solvent was removed *in vacuo* and the residue washed with pentane (3 x 40 mL) and dried to afford a grey powder. One equivalent of ZrCl₄ (796 mg, 3.41 mmol) was added and the mixture dissolved in benzene and left to stir for sixty hours. The solution changed colour from green, to orange and finally red/brown. The solvent was removed under vacuum and the product extracted with pentane (3 x 40 mL) and filtered through Celite. The filtrate was concentrated *in vacuo* and stored at -34 °C. This yielded **SB(Cp,I*)ZrCl₂** as an orange/brown precipitate in 23% yield (365 mg, 0.76 mmol). Orange crystals, suitable for single crystal X-ray diffraction, were grown from a concentrated solution in hexanes at -34 °C.
¹H NMR (*d₆*-benzene): δ 6.59 (2H, dm, CpH), 5.60 (2H, dm, CpH), 2.52 (3H, s, ArMe), 2.48 (3H, s, ArMe), 2.26 (3H, s, ArMe), 2.15 (3H, s, ArMe), 2.05 (3H, s, ArMe), 1.97 (3H, s, ArMe), 0.72 (3H, s, SiMe), 0.64 (3H, s, SiMe).
¹³C{¹H} NMR (*d₆*-benzene): δ 135.65 (Ar), 135.13 (Ar), 134.86 (Ar), 131.11 (Ar), 131.50 (Ar), 131.15 (Ar), 129.16 (Ar), 126.35 (Ar), 125.92 (ArSi), , 115.87 (CpH), 106.49 (CpH), 84.01 (CpSi), 21.69 (ArMe), 17.91 (ArMe), 17.64 (ArMe), 17.16 (ArMe), 16.92 (ArMe), 15.97 (ArMe), 5.59 (SiMe), 3.26 (SiMe).
MS (EI): Predicted: m/z 482.0372. Observed: m/z 482.0371.IR (KBr) (cm⁻¹): 2961, 2925, 1543, 1260, 1029, 809, 668.
CHN Analysis (%): Expected: C 54.74, H 5.85, Found: C 54.85, H 5.94.

### Example 1b - Synthesis of SB(Cp,I*)HfCl₂

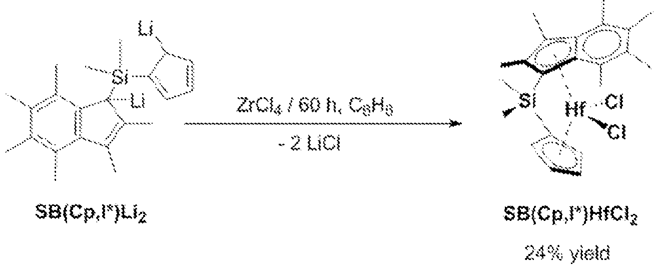

SB(Cp,I*)Li₂ (1 g, 2.99 mmol) and HfCl₄ (958 mg, 2.99 mmol) were added to a Schlenk tube. Benzene (100 mL) was added and the reaction was left to stir for 60 hours. The solution changed colour from brown to yellow. The solvent was the removed under vacuum and the product was extracted with pentane (3 x 40 mL) and filtered through Celite. The filtrate was concentrated *in vacuo* and stored at -34 °C yielding **SB(Cp,I*)HfCl₂** as yellow crystals, suitable for single crystal X-ray diffraction, in 24% yield (360 mg, 0.632 mmol).
¹H NMR (*d₆*-benzene): δ 6.54 (3H, dm, CpH), 5.53 (3H, dm, CpH), 2.57 (3H, s, ArMe), 2.56 (3H, s, ArMe), 2.25 (3H, s, ArMe), 2.20 (3H, s, ArMe), 2.09 (3H, s, ArMe), 2.03 (3H, s, ArMe), 0.65 (3H, s, SiMe), 0.57 (3H, s, SiMe).
¹³C{¹H} NMR (*d₆*-benzene): δ 134.55 (Ar), 134.18 (Ar), 133.51 (Ar), 131.73 (Ar), 131.05 (Ar), 129.64 (Ar), 126.23 (Ar), 125.18 (Ar), 124.38 (Ar), 113.33 (CₚH), 107.32 (CₚH), 82.33 (CₚSi), 21.53 (ArMe), 17.68 (ArMe), 17.37 (ArMe), 16.77 (ArMe), 16.64 (ArMe), 15.51 (ArMe), 5.00 (SiMe), 3.00 (SiMe).
MS (EI): Predicted: m/z 570.0785. Observed: m/z 570.0701. IR (KBr) (cm⁻¹): 2960, 2923, 1542, 1262, 1028, 812, 670.
CHN Analysis (%): Expected: C 46.36, H 4.95, Found: C 46.52, H 5.04.

### Example 1c - Synthesis of SB(Cp,I*)ZrCl(O-Me₂-C₆H₃)

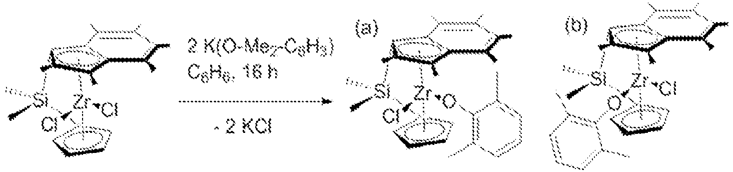

SB(Cp,I*)ZrCl₂ (100 mg, 0.207 mmol) and 2,6-dimethyl potassium phenoxide (66 mg, 0.414 mmol) were added to a Schlenk tube, dissolved in benzene (20 mL), and left to stir for sixteen hours. The solvent was removed *in vacuo* and the product extracted with pentane (2 x 20 mL). The ¹H NMR spectra showed resonances corresponding to a mixture of two isomers. Thin, yellow crystals of isomer (a), suitable for single crystal X-ray diffraction were obtained when the solution was concentrated and stored in a -34 °C freezer. Purity was 94% by ¹H NMR spectroscopy and crystals were obtained in 15% yield (16 mg, 0.028 mmol).

### Isomer (a):

¹H NMR (*d₆*-benzene): δ 7.06 (2H, dd, ArₚₕₑₙH), 6.82 (1H, t, ArₚₕₑₙH), 6.26 (1H, m, CpH), 6.13 (1H, m, CpH), 5.93 (1H, m, CpH), 5.61 (1H, m, CpH), 2.34 (3H, s, ArMe), 2.24 (3H, s, ArMe), 2.22 (6H, s, ArₚₕₑₙMe), 2.19 (3H, s ,ArMe), 2.18 (3H, s, ArMe), 2.15 (3H, s, ArMe), 1.99 (3H, s, ArMe), 0.81 (3H, s, SiMe), 0.75 (3H, s, SiMe).

### Isomer (b):

¹H NMR (*d₆*-benzene): δ 6.88 (2H, dd, ArₚₕₑₙH), 6.69 (1H, t, ArₚₕₑₙH), 6.51 (1H, m, CpH), 6.02 (1H, m, CpH), 5.88 (1H, m, CpH), 5.80 (1H, m, CpH), 2.61 (3H, s, ArMe), 2.42 (6H, s, ArₚₕₑₙMe), 2.40 (3H, s, ArMe), 2.08 (3H, s, ArMe), 1.99 (3H, s, ArMe), 1.64 (3H, s, ArMe), 1.48 (3H, s, ArMe), 0.64 (3H, s, SiMe), 0.61 (3H, s, SiMe).

### Example 2 - lactide polymerisation

Polymerisations were carried out in Young's tap NMR tubes containing 40 mg, 0.278 mmol of either L-lactide or *rac*-lactide in a *d*₁-chloroform solution with an amount of initiator to correspond to an initiator/lactide ratio of 50:1. The reaction was followed by ¹H NMR spectroscopy comparing the integration values of the methine signals of PLA and LA. All polymerisations were worked up by decanting into -5 °C pentane (10 mL), removing the pentane, washing the resultant polymer with diethyl ether (10 mL) and drying under vacuum for 18 hours.

Polymerisation studies were carried out using SB(Cp,I*)ZrCl₂ and SB(Cp,I*)HfCl₂ in the presence of two equivalents of benzyl alcohol as a co-initiator, which is postulated to form the bis(benzyl alkoxide) *in situ* and a mixture of mono(alkoxide) complexes SB(Cp,I*)ZrCl(O-2,6-Me₂-C₆H₃) without a co-initiator.

In order to compare the activities of these complexes, all initial polymerisation studies were carried out at 80 °C in *d*₁-chloroform, with an *S,S*-LA: initiator ratio of 50:1, ensuring that [*S,S*-LA]= 0.5 M.

**Table 1. Rate constants and GPC data for ring-opening polymerisation of S,S-LA with selected initiators.**

| Initiator | *k*_{obs} (h⁻¹) | *M*_{n,exp} (gmol⁻¹) | PDI (*M*_{w}/*M*ₙ) |
|---|---|---|---|
| SB(Cp,I*)ZrCl₂ | 0.2317 | 4071 | 1.10 |
| SB(Cp,I*)HfCl₂ | 0.2262 | 3826 | 1.11 |
| SB(Cp,I*)ZrCl(OR) | 0.2081 | 18032 | 1.30 |
| R = 2,6-Me₂-C₆H₃ | | | |

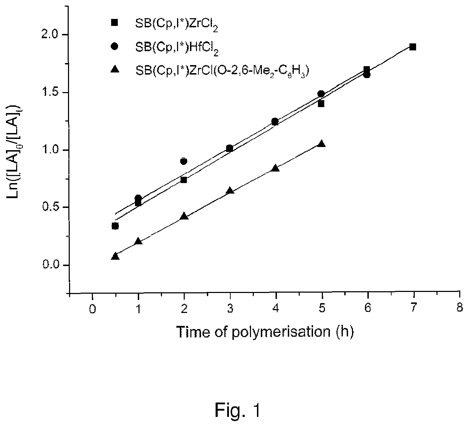

The results shown in Table 1 and Fig. 1 demonstrate that SB(Cp,I*)ZrCl₂ displays the highest activity with 88% conversion in seven hours (*k*_{obs} = 0.2317 ± 0.0058 h⁻¹), closely followed by SB(Cp,l*)HfCl₂ with 81% conversion in six hours (*k*_{obs} = 0.2262 ± 0.0147 h⁻¹) while SB(Cp,I*)ZrCl(O-2,6-Me₂-C₆H₃) was slower with 66 % conversion in 5 hours (k_{obs} = 0.2081 ± 0.0055 h⁻¹). The values of 1.10 and 1.11 for SB(Cp,I*)ZrCl₂ and SB(Cp,I*)HfCl₂ show that polymerisation is well controlled for these. The value reported for SB(Cp,I*)ZrCl(O-2,6-Me₂-C₆H₃) is slightly higher but is still considered controlled; the higher value could be attributed to the mixture of isomers used in the polymerisation.

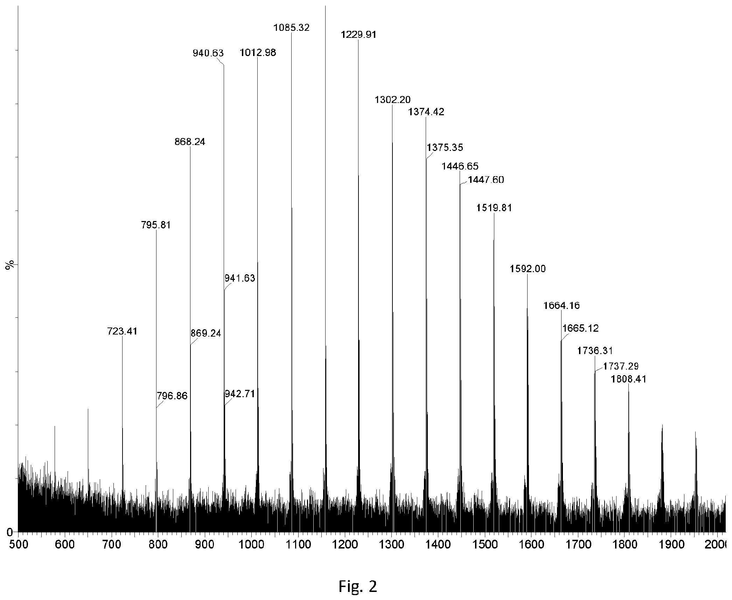

The MALDI-TOF mass spectrum of the polymer produced when (*S,S*)-LA was polymerised with SB(Cp,I*)ZrCl₂ and benzyl alcohol shows a series of peaks which are *m*/*z* = 72 apart (Fig. 2).

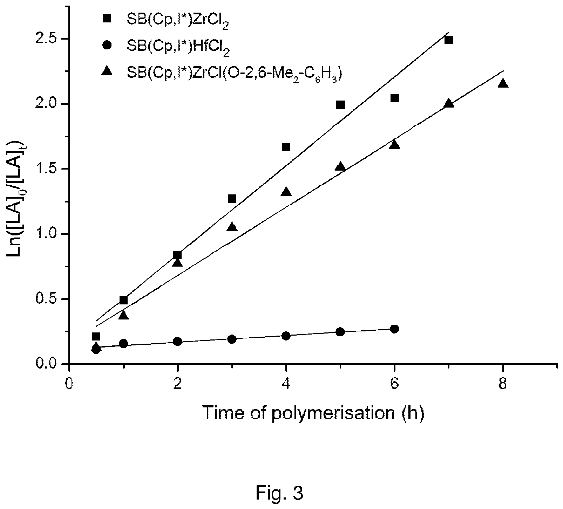

Fig. 3 shows a plot of In([LA]₀/[LA]ₜ) against time using SB(Cp,I*)ZrCl₂ and SB(Cp,I*)ZrCl₂ with 2 equivalents of benzyl alcohol, and SB(Cp,I*)ZrCl(O-2,6-Me₂-C₃H₆) in the absence of a co-initiator, at 80 °C with an initial *rac*-lactide concentration of 0.5 M.

**Table 2. Rate constants and GPC data for ring opening polymerisation of rac-LA with selected initiators.**

| Initiator | *k*_{obs} (h⁻¹) | *M*_{n,exp} (gmol⁻¹) | PDI (*M*_{w}/*M*ₙ) |
|---|---|---|---|
| SB(Cp,I*)ZrCl₂ | 0.3948 | 17826 | 1.07 |
| SB(Cp,I*)HfCl₂ | 0.0258 | - | - |
| SB(Cp,I*)ZrCl(OR) | 0.2617 | 15981 | 1.18 |
| R = 2,6-Me₂-C₆H₃ | | | |

Table 2 shows that SB(Cp,I*)ZrCl₂ catalyses *rac*-LA the fastest, k_{obs} = 0.3948 h⁻¹, shortly followed by SB(Cp,I*)ZrCl(O-2,6-Me₂-C₃H₆), k_{obs} = 0.2617 h⁻¹. The PDI value of 1.07 for SB(Cp,I*)ZrCl₂ is very low when compared with literature. SB(Cp,I*)ZrCl(O-2,6-Me₂-C₃H₆) shows slightly less control, compared to SB(Cp,I*)ZrCl₂ and SB(Cp,I*)HfCl₂, over the molecular weight with a PDI of 1.18 (which is still considered controlled).

The effect of temperature on the rate constant and GPC data for ring-opening polymerisation of *S,S*-Lactide with SB(Cp,l*)ZrCl₂ was also investigated. The results are outlined in Table 3 below:

**Table 3. Rate constants and GPC data for ring-opening polymerisation of S,S-Lactide with SB(Cp,l*)ZrCl₂ at variable temperatures initiators.**

| Temp/ °C | k_{obs}/ h⁻¹ | *M*_{n,exp}/ gmol⁻¹ | PDI (*M*_{w}/*M*ₙ) |
|---|---|---|---|
| 60 | 0.0731 | - | - |
| 70 | 0.1252 | 3190 | 1.08 |
| 80 | 0.2317 | 3870 | 1.11 |
| 90 | 0.3033 | 5046 | 1.13 |

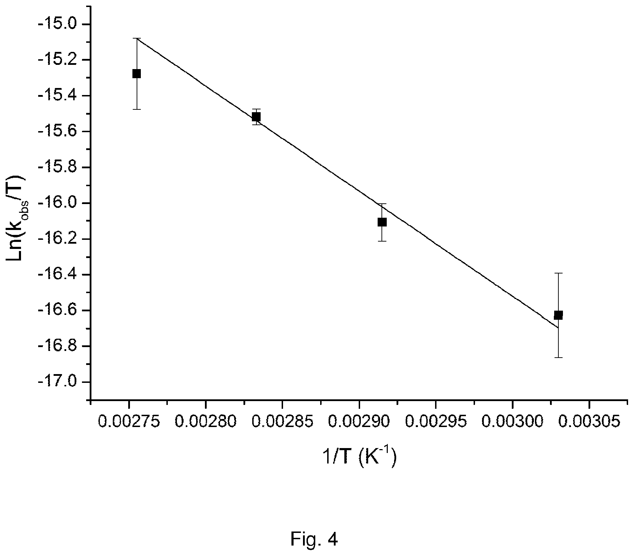

A plot of In(k_{obs}/T) against 1/T (Fig. 4) gives a linear plot with gradient of -ΔH^{‡}/R and an intercept of ΔS^{‡}/R + In(k_{B}/h). The lactide: initiator ratio was kept at 50:1 maintaining an initial (*S*,*S*)-lactide concentration of 0.5 M. The value of ΔH^{‡} obtained from this study is -49 ± 4 kJmol⁻¹, the value obtained for ΔS^{‡} was -188 ± 9 Jmol⁻¹K⁻¹ again this is well within the values in the literature, with the negative sign indicating the transition state has a higher degree of order than the starting material, as is to be expected for a coordination-insertion mechanism.

A further study was undertaken to investigate how the zirconium concentration affected the overall polymerisation rate. A constant concentration of 0.5 M of (*S*,*S*)-lactide was used and lactide:initiator ratios of 10:1, 25:1, 50:1 and 100:1 were used ([Zr]= 0.05, 0.02, 0.01 and 0.005 M respectively).

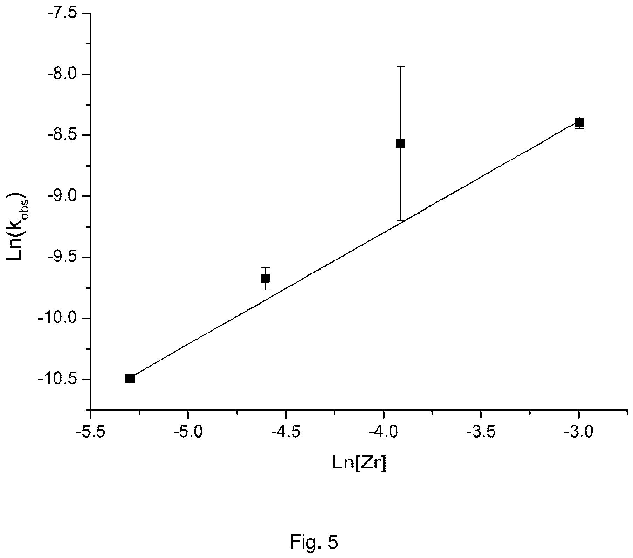

The double logarithmic plot of In[Zr] against In[*k*_{obs}] (Fig. 5) reveals a straight line plot with slope of 0.9. As expected for a first order rate law the rate, *k*_{obs}, increases with increasing initiator concentration as there are more active species present to polymerise the monomer.

While specific embodiments of the invention have been described herein for the purpose of reference and illustration, various modifications will be apparent to a person skilled in the art without departing from the scope of the invention as defined by the appended claims.

## Claims

1. Use of a compound according to formula I shown below in the polymerisation of cyclic esters or cyclic amides: 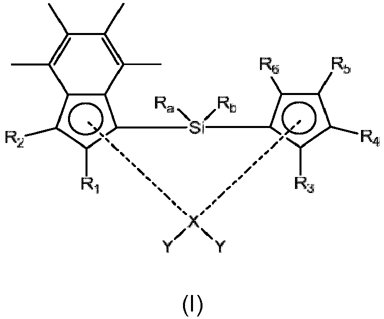 wherein:
R₁ and R₂ are each independently (1-2C)alkyl;
R₃ and R₄ are each independently hydrogen or (1-4C)alkyl, or R₃ and R₄ are linked such that, when taken in combination with the atoms to which they are attached, they form a 6-membered fused aromatic ring optionally substituted with one or more groups selected from (1-6C)alkyl, (2-6C)alkenyl, (2-6C)alkynyl, (1-6C)alkoxy, aryl, heteroaryl, carbocyclic and heterocyclic, wherein each aryl, heteroaryl, carbocyclic and heterocyclic group is optionally substituted with one or more groups selected from (1-6C)alkyl, (2-6C)alkenyl, (2-6C)alkynyl, (1-6C)alkoxy, halo, amino, nitro, cyano, (1-6C)alkylamino, [(1-6C)alkyl]₂amino and -S(O)₂(1-6C)alkyl;
R₅ and R₆ are each independently hydrogen or (1-4C)alkyl, or R₅ and R₆ are linked such that, when taken in combination with the atoms to which they are attached, they form a 6-membered fused aromatic ring optionally substituted with one or more groups selected from (1-6C)alkyl, (2-6C)alkenyl, (2-6C)alkynyl, (1-6C)alkoxy, aryl, heteroaryl, carbocyclic and heterocyclic, wherein each aryl, heteroaryl, carbocyclic and heterocyclic group is optionally substituted with one or more groups selected from (1-6C)alkyl, (2-6C)alkenyl, (2-6C)alkynyl, (1-6C)alkoxy, halo, amino, nitro, cyano, (1-6C)alkylamino, [(1-6C)alkyl]₂amino and -S(O)₂(1-6C)alkyl;
Rₐ and R_{b} are independently selected from (1-6C)alkyl, (1-6C)alkoxy, (2-6C)alkenyl, (2-6C)alkynyl, (1-6C)alkylamino, [(1-6C)alkyl]₂amino, aryl, halo, amino, nitro and cyano;
X is selected from zirconium or hafnium; and
each Y group is independently selected from halo, hydride, a phosphonated, sulfonated or borate anion, or a (1-6C)alkyl, (2-6C)alkenyl, (2-6C)alkynyl, (1-6C)alkoxy, aryl or aryloxy group which is optionally substituted with one or more groups selected from (1-6C)alkyl, halo, nitro, amino, phenyl, (1-6C)alkoxy, -C(O)NRₓR_{y}, or Si[(1-4C)alkyl]₃; and
wherein Rₓ and R_{y} are independently (1-4C)alkyl.

2. The use of claim 1, wherein
R₃ and R₄ are each independently hydrogen or linear (1-4C)alkyl, or R₃ and R₄ are linked such that, when taken in combination with the atoms to which they are attached, they form a 6-membered fused aromatic ring;
and/or
wherein R₅ and R₆ are each independently hydrogen or linear (1-4C)alkyl, or R₅ and R₆ are linked such that, when taken in combination with the atoms to which they are attached, they form a 6-membered fused aromatic ring.

3. The use of claim 1 or 2, wherein
R₃ and R₄ are each hydrogen;
and/or
R₅ and R₆ are each hydrogen.

4. The use of claim 1, 2 or 3, wherein X is Zr.

5. The use of any preceding claim, wherein each Y is independently selected from halo, hydride, or a (1-6C)alkyl, (1-6C)alkoxy or aryloxy group which is optionally substituted with one or more groups selected from halo and (1-4C)alkyl.

6. The use of any preceding claim, wherein each Y is independently selected from halo, or a (1-6C)alkoxy, or aryloxy group which is optionally substituted with one or more groups selected from halo and (1-4C)alkyl.

7. The use of any preceding claim, wherein each Y is independently selected from Cl, Br or a group

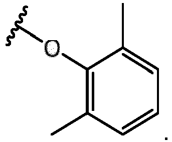

8. The use of any preceding claim, wherein R₁ and R₂ are each independently (1-2C)alkyl.

9. The use of any preceding claim, wherein R₁ and R₂ are each methyl.

10. The use of any preceding claim, wherein Rₐ and R_{b} are each independently (1-4C)alkyl.

11. The use of any preceding claim, wherein Rₐ and R_{b} are each methyl.

12. The use of claim 1, wherein the compound of formula I has any one of the following structures:

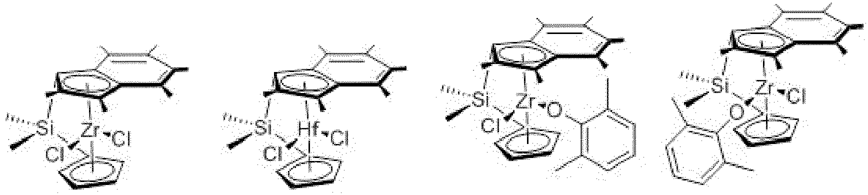

13. The use of any preceding claim, wherein the compound of formula I is used with an activator selected from tert-butanol, benzyl alcohol or iso-propanol.

14. The use of any preceding claim, wherein the cyclic amides or cyclic esters is a lactide or lactone.

15. The use of any preceding claim, wherein the cyclic amides or cyclic esters is a lactide having any one of the following structures:

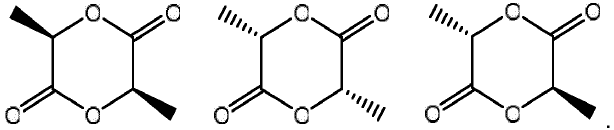

## Patentansprüche

1. Verwendung einer Verbindung gemäß unten gezeigter Formel I bei der Polymerisierung von cyclischen Estern oder cyclischen Amiden: 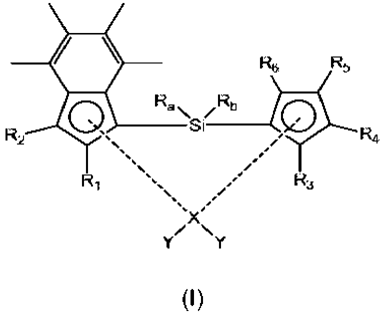 wobei:
R₁ und R₂ jeweils unabhängig (1-2C)-Alkyl sind;
R₃ und R₄ jeweils unabhängig Wasserstoff oder (1-4C)-Alkyl sind oder R₃ und R₄ verknüpft sind, sodass sie, wenn in Kombination mit den Atomen genommen, an die sie angelagert sind, einen 6-gliedrigen, fusionierten, aromatischen Ring bilden, optional substituiert mit einer oder mehreren Gruppen, ausgewählt aus (1-6C)-Alkyl, (2-6C)-Alkenyl, (2-6C)-Alkynyl, (1-6C)-Alkoxy, Aryl, Heteroaryl, carbocyclischer und heterocyclischer, wobei jede Aryl-, Heteroaryl-, carbocyclische und heterocyclische Gruppe optional mit einer oder mehreren Gruppen, ausgewählt aus (1-6C)-Alkyl, (2-6C)-Alkenyl, (2-6C)-Alkynyl, (1-6C)-Alkoxy, Halo, Amino, Nitro, Cyano, (1-6C)-Alkylamino, [(1-6C)-Alkyl]₂amino und -S(O)₂(1-6C)-Alkyl, substituiert ist;
R₅ und R₆ jeweils unabhängig Wasserstoff oder (1-4C)-Alkyl sind oder R₅ und R₆ verknüpft sind, sodass sie, wenn in Kombination mit den Atomen genommen, an die sie angelagert sind, einen 6-gliedrigen, fusionierten, aromatischen Ring bilden, optional substituiert mit einer oder mehreren Gruppen, ausgewählt aus (1-6C)-Alkyl, (2-6C)-Alkenyl, (2-6C)-Alkynyl, (1-6C)-Alkoxy, Aryl, Heteroaryl, carbocyclischer und heterocyclischer, wobei jede Aryl-, Heteroaryl-, carbocyclische und heterocyclische Gruppe optional mit einer oder mehreren Gruppen, ausgewählt aus (1-6C)-Alkyl, (2-6C)-Alkenyl, (2-6C)-Alkynyl, (1-6C)-Alkoxy, Halo, Amino, Nitro, Cyano, (1-6C)-Alkylamino, [(1-6C)-Alkyl]₂amino und -S(O)₂(1-6C)-Alkyl, substituiert ist;
Rₐ und R_{b} unabhängig ausgewählt sind aus (1-6C)-Alkyl, (1-6C)-Alkoxy, (2-6C)-Alkenyl, (2-6C)-Alkynyl, (1-6C)-Alkylamino, [(1-6C)-Alkyl]₂amino, Aryl, Halo, Amino, Nitro und Cyano;
X ausgewählt ist aus Zirconium oder Hafnium; und
jede Y-Gruppe unabhängig ausgewählt ist aus Halo, Hydrid, einem phosphonierten, sulfonierten oder Boratanion oder einer (1-6C)-Alkyl-, (2-6C)-Alkenyl-, (2-6C)-Alkynyl-, (1-6C)-Alkoxy-, Aryl- oder Aryloxygruppe, die optional mit einer oder mehreren Gruppen, ausgewählt aus (1-6C)-Alkyl, Halo, Nitro, Amino, Phenyl, (1-6C)-Alkoxy, -C(O)NRₓR_{y} oder Si[(1-4C)-Alkyl]₃, substituiert ist; und
wobei Rₓ und R_{y} unabhängig (1-4C)-Alkyl sind.

2. Verwendung gemäß Anspruch 1, wobei
R₃ und R₄ jeweils unabhängig Wasserstoff oder lineares (1-4C)-Alkyl sind oder R₃ und R₄ verknüpft sind, sodass sie, wenn in Kombination mit den Atomen genommen, an die sie angelagert sind, einen 6-gliedrigen, fusionierten, aromatischen Ring bilden;
und/oder
wobei R₅ und R₆ jeweils unabhängig Wasserstoff oder lineares (1-4C)-Alkyl sind oder R₅ und R₆ verknüpft sind, sodass sie, wenn in Kombination mit den Atomen genommen, an die sie angelagert sind, einen 6-gliedrigen, fusionierten, aromatischen Ring bilden.

3. Verwendung gemäß Anspruch 1 oder 2, wobei
R₃ und R₄ jeweils Wasserstoff sind;
und/oder
R₅ und R₆ jeweils Wasserstoff sind.

4. Verwendung gemäß Anspruch 1, 2 oder 3, wobei X Zr ist.

5. Verwendung gemäß einem vorhergehenden Anspruch, wobei jedes Y unabhängig ausgewählt ist aus Halo, Hydrid oder einer (1-6C)-Alkyl-, (1-6C)-Alkoxy- oder Aryloxygruppe, die optional mit einer oder mehreren Gruppen, ausgewählt aus Halo und (1-4C)-Alkyl, substituiert ist.

6. Verwendung gemäß einem vorhergehenden Anspruch, wobei jedes Y unabhängig ausgewählt ist aus Halo oder einer (1-6C)-Alkoxy- oder Aryloxygruppe, die optional mit einer oder mehreren Gruppen, ausgewählt aus Halo und (1-4C)-Alkyl, substituiert ist.

7. Verwendung gemäß einem vorhergehenden Anspruch, wobei jedes Y unabhängig ausgewählt ist aus Cl, Br oder einer Gruppe

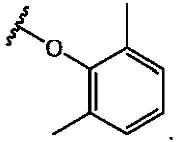

8. Verwendung gemäß einem vorhergehenden Anspruch, wobei R₁ und R₂ jeweils unabhängig (1-2C)-Alkyl sind.

9. Verwendung gemäß einem vorhergehenden Anspruch, wobei R₁ und R₂ jeweils Methyl sind.

10. Verwendung gemäß einem vorhergehenden Anspruch, wobei Rₐ und R_{b} jeweils unabhängig (1-4C)-Alkyl sind.

11. Verwendung gemäß einem vorhergehenden Anspruch, wobei Rₐ und R_{b} jeweils Methyl sind.

12. Verwendung gemäß Anspruch 1, wobei die Verbindung der Formel I eine oder mehrere der folgenden Strukturen aufweist:

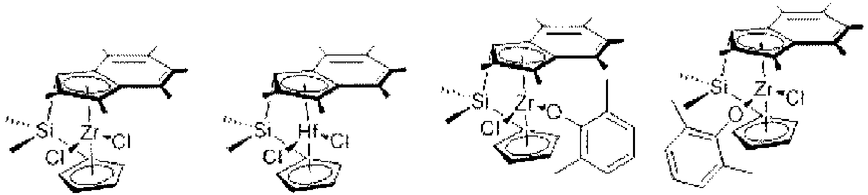

13. Verwendung gemäß einem vorhergehenden Anspruch, wobei die Verbindung der Formel I mit einem Aktivator, ausgewählt aus tert-Butanol, Benzylalkohol oder Isopropanol, verwendet wird.

14. Verwendung gemäß einem vorhergehenden Anspruch, wobei die cyclischen Amide oder cyclischen Ester ein Lactid oder Lacton sind.

15. Verwendung gemäß einem vorhergehenden Anspruch, wobei die cyclischen Amide oder cyclischen Ester ein Lactid ist, das eine der folgenden Strukturen aufweist:

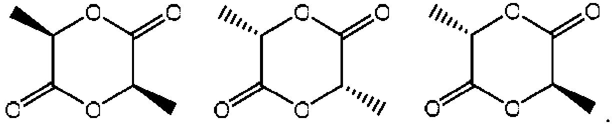

## Revendications

1. Utilisation d'un composé selon la formule I représentée ci-dessous dans la polymérisation d'esters cycliques ou d'amides cycliques : 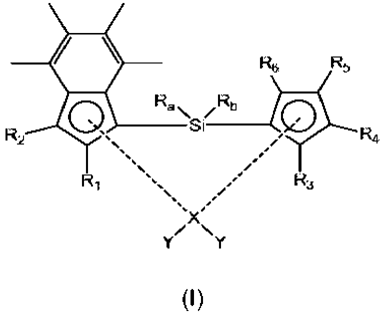 dans laquelle :
R₁ et R₂ sont chacun indépendamment un alkyle en (C1 à 2) ;
R₃ et R₄ sont chacun indépendamment un hydrogène ou un alkyle en (C1 à 4), ou R₃ et R₄ sont liés de sorte que, quand ils sont pris en combinaison avec les atomes auxquels ils sont attachés, ils forment un noyau aromatique condensé de 6 éléments facultativement substitué par un ou plusieurs groupes sélectionnés parmi un alkyle en (C1 à 6), un alcényle en (C2 à 6), un alcynyle en (C2 à 6), un alcoxy en (C1 à 6), un aryle, un hétéroaryle, carbocyclique et hétérocyclique, dans laquelle chaque groupe aryle, hétéroaryle, carbocyclique et hétérocyclique est facultativement substitué parmi un ou plusieurs groupes sélectionnés parmi un alkyle en (C1 à 6), un alcényle en (C2 à 6), un alcynyle en (C2 à 6), un alcoxy en (C1 à 6), un halo, un amino, un nitro, un cyano, un alkylamino en (C1 à 6), [alkyle en (C1 à 6)]₂amino et -S(O)₂alkyle en (C1 à 6) ;
R₅ et R₆ sont chacun indépendamment un hydrogène ou un alkyle en (C1 à 4), ou R₅ et R₆ sont liés de sorte que, quand ils sont pris en combinaison avec les atomes auxquels ils sont attachés, ils forment un noyau aromatique condensé de 6 éléments facultativement substitué par un ou plusieurs groupes sélectionnés parmi un alkyle en (C1 à 6), un alcényle en (C2 à 6), un alcynyle en (C2 à 6), un alcoxy en (C1 à 6), un aryle, un hétéroaryle, carbocyclique et hétérocyclique, dans laquelle chaque groupe aryle, hétéroaryle, carbocyclique et hétérocyclique est facultativement substitué parmi un ou plusieurs groupes sélectionnés parmi un alkyle en (C1 à 6), un alcényle en (C2 à 6), un alcynyle en (C2 à 6), un alcoxy en (C1 à 6), un halo, un amino, un nitro, un cyano, un alkylamino en (C1 à 6), [alkyle en (C1 à 6)]₂amino et -S(O)₂alkyle en (C1 à 6) ;
Rₐ et R_{b} sont indépendamment sélectionnés parmi un alkyle en (C1 à 6), un alcoxy en (C1 à 6), un alcényle en (C2 à 6), un alcynyle en (C2 à 6), un alkylamino en (C1 à 6), [alkyle en (C1 à 6)]₂amino, un aryle, un halo, un amino, un nitro et un cyano ;
X est sélectionné parmi le zirconium ou le hafnium ;
et chaque groupe Y est indépendamment sélectionné parmi un halo, un hydrure, un anion phosphoné, sulfoné ou borate, ou un groupe alkyle en (C1 à 6), alcényle en (C2 à 6), alcynyle en (C2 à 6), alcoxy en (C1 à 6), aryle ou aryloxy qui est facultativement substitué par un ou plusieurs groupes sélectionnés parmi un alkyle en (C1 à 6), un halo, un nitro, un amino, un phényle, un alcoxy en (C1 à 6), -C(O)NRₓR_{y}, ou Si[alkyle en (C1 à 4)]₃ ;
et dans laquelle Rₓ et R_{y} sont indépendamment un alkyle en (C1 à 4).

2. Utilisation selon la revendication 1, dans laquelle R₃ et R₄ sont chacun indépendamment un hydrogène ou un alkyle en (C1 à 4) linéaire, ou R₃ et R₄ sont liés de sorte que, quand ils sont pris en combinaison avec les atomes auxquels ils sont attachés, ils forment un noyau aromatique condensé de 6 éléments ;
et/ou dans laquelle R₅ et R₆ sont chacun indépendamment un hydrogène ou un alkyle en (C1 à 4) linéaire, ou R₅ et R₆ sont liés de sorte que, quand ils sont pris en combinaison avec les atomes auxquels ils sont attachés, ils forment un noyau aromatique condensé de 6 éléments.

3. Utilisation selon la revendication 1 ou 2, dans laquelle R₃ et R₄ sont chacun un hydrogène ;
et/ou R₅ et R₆ sont chacun un hydrogène.

4. Utilisation selon la revendication 1, 2 ou 3, dans laquelle X est Zr.

5. Utilisation selon l'une quelconque des revendications précédentes, dans laquelle chaque Y est indépendamment sélectionné parmi un halo, un hydrure, ou un groupe alkyle en (C1 à 6), alcoxy en (C1 à 6) ou aryloxy qui est facultativement substitué par un ou plusieurs groupes sélectionnés parmi un halo et un alkyle en (C1 à 4).

6. Utilisation selon l'une quelconque des revendications précédentes, dans laquelle chaque Y est indépendamment sélectionné parmi un halo, ou un groupe alcoxy en (C1 à 6), ou aryloxy qui est facultativement substitué par un ou plusieurs groupes sélectionnés parmi un halo et un alkyle en (C1 à 4).

7. Utilisation selon l'une quelconque des revendications précédentes, dans laquelle chaque Y est indépendamment sélectionné parmi Cl, Br ou un groupe

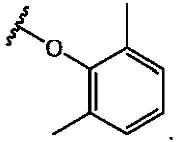

8. Utilisation selon l'une quelconque des revendications précédentes, dans laquelle R₁ et R₂ sont chacun indépendamment un alkyle en (C1 à 2).

9. Utilisation selon l'une quelconque des revendications précédentes, dans laquelle R₁ et R₂ sont chacun un méthyle.

10. Utilisation selon l'une quelconque des revendications précédentes, dans laquelle Rₐ et R_{b} sont chacun indépendamment un alkyle en (C1 à 4).

11. Utilisation selon l'une quelconque des revendications précédentes, dans laquelle Rₐ et R_{b} sont chacun un méthyle.

12. Utilisation selon la revendication 1, dans laquelle le composé de formule I a l'une quelconque des structures suivantes :

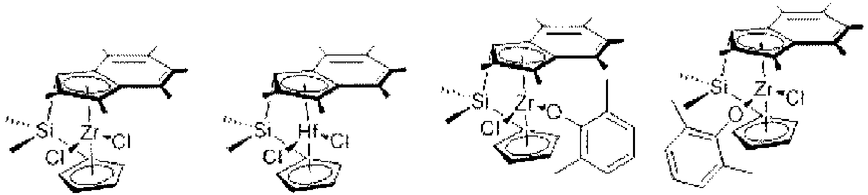

13. Utilisation selon l'une quelconque des revendications précédentes, dans laquelle le composé de formule I est utilisé avec un activateur sélectionné parmi le tert-butanol, l'alcool benzylique ou l'isopropanol.

14. Utilisation selon l'une quelconque des revendications précédentes, dans laquelle les amides cycliques ou les esters cycliques sont un lactide ou une lactone.

15. Utilisation selon l'une quelconque des revendications précédentes, dans laquelle les amides cycliques ou les esters cycliques sont un lactide ayant l'une des structures suivantes :
